# EUROPEAN PATENT SPECIFICATION

(11) **EP 4 457 437 B1**
(45) Date of publication and mention of the grant of the patent: **04.02.2026**
(21) Application number: 22839130.6
(22) Date of filing: 01.12.2022
(51) Int. Cl.: F03D 13/10

(54) **METHOD FOR ASSEMBLING A NACELLE OF A WIND TURBINE AND LIFT ARRANGEMENT FOR SAME**
VERFAHREN ZUR MONTAGE EINER GONDEL EINER WINDENERGIEANLAGE UND AUFZUGANORDNUNG HIERFÜR
PROCÉDÉ D'ASSEMBLAGE D'UNE NACELLE D'UNE ÉOLIENNE ET AGENCEMENT DE LEVAGE ASSOCIÉ

(30) Priority: 29.12.2021 DK PA202170676
(43) Date of publication of application: 06.11.2024
(73) Proprietor: VESTAS WIND SYSTEMS A/S, 8200 Aarhus N (DK)
(72) Inventor: BROE, Christine, 8200 Aarhus N (DK); KOFMAN, Joris, 8200 Aarhus N (DK)
(74) Representative: Vestas Patents Department
(86) International application number: PCT/DK2022/050255
(87) International publication number: WO 2023/126037

(56) References cited:
- EP-B1- 1 577 550
- DE-U1- 29 924 115
- US-A1- 2017 363 071
- US-A1- 2021 277 871

## Description

### Technical Field

This invention relates generally to wind turbines, and more particularly to methods for assembling/disassembling a nacelle of a wind turbine and lift arrangements for accomplishing same.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator. Wind turbines may be located either on a land mass (onshore) or within a body of water (offshore).

As electrical energy demands have increased over the past years, the size of wind turbines has also increased so that they may produce additional electrical energy. As the wind turbines increase in size, the physical dimensions and weight of the wind turbine components also increase. As the size and weight of the wind turbine components increase, transporting the wind turbine components from the manufacturing facility to the assembly or installation site becomes increasingly challenging. To meet this challenge, the nacelle of a wind turbine may be constructed from one or more modules that contain one or more wind turbine components. The individual modules may be attached to one another to form the nacelle.

One must carefully consider how to arrange those modules so that the loads, in particular in the form of torque, do not require massive towers and yaw assemblies that are difficult and costly to manufacture, transport, and assemble. One approach is to arrange a main nacelle unit having a base plate around the yaw assembly and have auxiliary nacelle units attached to the sides of the main unit to form the nacelle. The auxiliary nacelle units may be pre-loaded with wind turbine components from the manufacturing facility or at the wind turbine installation site. Once at the installation site, the auxiliary nacelle units carrying the wind turbine components may then be lifted and attached to the sides of the main nacelle unit at the top of the tower using, for example, a large, high-capacity crane.

Current apparatus and methods for assembling a nacelle at the wind turbine installation site have some challenges. For example, one challenge is lifting/lowering the auxiliary nacelle unit to/from a desired height along the side of the main nacelle unit without significantly contacting the side of the main nacelle unit during the lifting or lowering process. Any significant contact during the lifting or lowering process may damage the auxiliary nacelle unit or the main nacelle unit. Another challenge involves the use of the large, high-capacity crane to assemble the modular nacelle. For example, it can be difficult, time consuming, and expensive to transport the large crane to installation sites for assembly of the wind turbine, including the nacelle. Moreover, the large cranes are generally rented during the period of construction from a third-party provider. The rental cost of large, high-capacity cranes, however, is prohibitive and represents a major expense to the overall construction costs of wind turbines. Furthermore, the operation of large cranes may take specialized personnel that further increases the overall construction costs.

It may be seen that what is needed is an improved method and apparatus for assembling/disassembling wind turbines. More particularly, there is a need for an improved method and apparatus for lifting/lowering the auxiliary nacelle units to/from the main nacelle unit without any significant contact between the auxiliary nacelle unit and the main nacelle unit. There is also a need to minimize or eliminate the need for a large, high-capacity crane to be rented, transported, and operated at the installation site to achieve assembly/disassembly of the wind turbine.

US2021/277871A1 is a relevant example of prior art.

### Summary

In a first aspect of the invention, a method of handling an auxiliary nacelle unit of a wind turbine is disclosed. The wind turbine includes a tower and a main nacelle unit attached to the tower and the method includes providing at least one temporary hoist formed from a plurality of hoist components, including a winch, a hoist cable operatively coupled to the winch, and a support frame defining a hoist cable locator configured to engage the hoist cable. The hoist cable locator is movable between a retracted position and an extended position. The support frame further includes a boom carrying the hoist cable locator, a mast, and an actuator. The method further includes assembling the at least one temporary hoist on the main nacelle unit by pivotally connecting the boom to the main nacelle unit, pivotally connecting the mast to the main nacelle unit, connecting the actuator between the mast and the boom, and routing the hoist cable from the winch to the hoist cable locator. The method further includes connecting the hoist cable to the auxiliary nacelle unit, activating the winch to move the auxiliary nacelle unit from a first position to a second position, and activating the actuator to move the hoist cable locator between the retracted position and the extended position.

In one embodiment, the auxiliary nacelle unit is being assembled to the main nacelle unit, and activating the winch may further include activating the winch to move the auxiliary nacelle unit from the first position adjacent a base of the tower to the second position adjacent the main nacelle unit on the tower, and moving the hoist cable locator may further include moving the hoist cable locator from the extended position, where the auxiliary nacelle unit is laterally spaced from the main nacelle unit, to the retracted position, where the auxiliary nacelle unit is in abutting relation to the main nacelle unit. In one embodiment, this method may further include connecting the auxiliary nacelle unit to the main nacelle unit after moving the hoist cable locator from the extended position to the retracted position to at least partially assemble the nacelle.

In one embodiment, the auxiliary nacelle unit is being disassembled from the main nacelle unit, and activating the winch may further include activating the winch to move the auxiliary nacelle unit from the first position adjacent the main nacelle unit on the tower to the second position adjacent the base of the tower, and moving the hoist cable locator may further include moving the hoist cable locator from the retracted position, where the auxiliary nacelle unit is in abutting relation to the main nacelle unit, to the extended position, where the auxiliary nacelle unit is laterally spaced from the main nacelle unit. In one embodiment, this method may further include disconnecting the auxiliary nacelle unit from the main nacelle unit before moving the hoist cable locator from the retracted position to the extended position to at least partially disassemble the nacelle.

In one embodiment, the method may further include providing a temporary jib hoist on the main nacelle unit. In this regard, and using the temporary jib hoist, the method may further include lifting at least some of the plurality of hoist components from adjacent the base of the tower to the main nacelle unit. The temporary jib hoist may then be used to assemble the at least one temporary hoist on the main nacelle unit. In another embodiment, the support frame may further include one or more mounting brackets. In this embodiment, assembling the at least one temporary hoist may further include connecting the one or more mounting brackets to the main nacelle unit adjacent a first side edge, wherein the boom and the mast may be pivotally connected to the one or more mounting brackets. Optionally, the support frame may further include one or more support brackets, and assembling the at least one temporary hoist may further include connecting the support bracket to the main nacelle unit adjacent a second opposing side edge. The one or more support brackets may include a bracket cable guide and the method may include routing the hoist cable to engage the bracket cable guide.

In yet another embodiment, the support frame may further include a tension member. In this embodiment, assembling the at least one temporary hoist may further include connecting the tension member to the mast to fix the position of the mast. For example, in one embodiment, the tension member may be connected between the one or more support brackets and the mast to fix the position of the mast. In a further embodiment, the method may include locating the winch of the at least one temporary hoist adjacent a base of the tower. After assembly/disassembly of the auxiliary nacelle unit to/from the main nacelle unit, the at least one temporary hoist may be disassembled and disconnected from the main nacelle unit.

In one embodiment, the step of providing the at least one temporary hoist may include providing two or more temporary hoists. In this embodiment, for example, a first temporary hoist may be connected to the main nacelle unit adjacent a forward end thereof and a second temporary hoist may be connected to the main nacelle unit adjacent a rear end thereof. The first temporary hoist may be configured to be connected to a forward portion of the auxiliary nacelle unit and the second temporary hoist may be configured to be connected to a rear portion of the auxiliary nacelle unit.

In second aspect of the invention, a lifting arrangement for handling an auxiliary nacelle unit of a wind turbine is disclosed. The wind turbine includes a tower and a main nacelle unit attached to the tower. The lifting arrangement includes at least one temporary hoist attachable to the main nacelle unit, wherein the at least one temporary hoist includes a winch, a hoist cable operatively coupled to the winch, and a support frame attachable to the main nacelle unit and including a hoist cable locator configured to engage the hoist cable. In this aspect, the support frame may include a boom configured to be pivotally connected to the main nacelle unit, the boom including the hoist cable locator, a mast configured to be pivotally connected to the main nacelle unit, and an actuator configured to be coupled to the boom and the mast and movable so as to move the hoist cable locator between a retracted position and an extended position.

In one embodiment, the support frame may further include one or more mounting brackets attachable to the main nacelle unit and configured to be pivotally connected to the boom and the mast. Optionally, the support frame may further include one or more support brackets attachable to the main nacelle unit. The one or more support brackets may preferably include a bracket cable guide configured to engage the hoist cable. The support frame may also include a tension member configured to be coupled to mast to thereby fix the position of the mast. In one embodiment, for example, the tension member may be connected between the one or more support brackets and the mast to fix the position of the mast. In one embodiment, the tension member may include a rigid strut. Alternatively, however, the tension member may include a wire, rope, or cable.

In one embodiment, the at least one temporary hoist may include two or more temporary hoists. For example, the lifting arrangement may include a first temporary hoist adjacent a forward end of the main nacelle unit and a second temporary hoist adjacent a rear end of the main nacelle unit. The first temporary hoist may be configured to connect to a forward portion of the auxiliary nacelle unit and the second temporary hoist may be configured to connect to a rear portion of the auxiliary nacelle unit.

In another embodiment, the lifting arrangement may further include a temporary jib hoist attachable to the main nacelle unit and configured to lift components of the at least one temporary hoist to/from the main nacelle unit. The temporary jib hoist may also be configured to assemble the at least one temporary hoist to the top of the main nacelle unit. In one embodiment, the temporary jib hoist may include a tower attachable to the main nacelle unit and a boom movably attached to a top of the tower.

In a third aspect of the invention, a partially assembled wind turbine includes a tower, a main nacelle unit connected to the tower, and the lifting arrangement described above attached to the main nacelle unit for assembling the auxiliary nacelle unit to the main nacelle unit, or disassembling the auxiliary nacelle unit from the main nacelle unit.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a perspective view of a wind turbine having a nacelle including a main nacelle unit and two auxiliary nacelle units attached to the side of the main nacelle unit;
Fig. 2 is a perspective view of an auxiliary nacelle unit spaced apart from the main nacelle unit by the temporary hoist in the extended position;
Fig. 3 is a perspective view of the auxiliary nacelle unit of Fig. 2 in abutting relation to the main nacelle unit with the temporary hoist in the retracted position;
Fig. 4 illustrates a flowchart with a sequence of steps for assembling a temporary hoist according to an embodiment of the invention;
Fig. 5 illustrates a flowchart with a sequence of steps for connecting an auxiliary nacelle unit to a main nacelle unit according to an embodiment of the invention; and

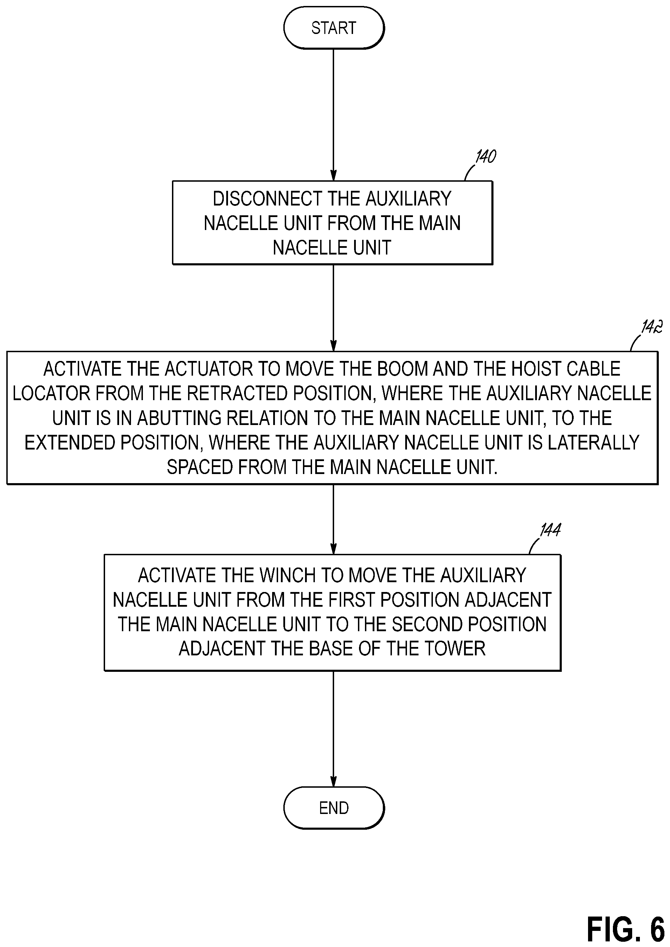

Fig. 6 illustrates a flowchart with a sequence of steps for disconnecting an auxiliary nacelle unit from a main nacelle unit according to an embodiment of the invention.

### Detailed Description

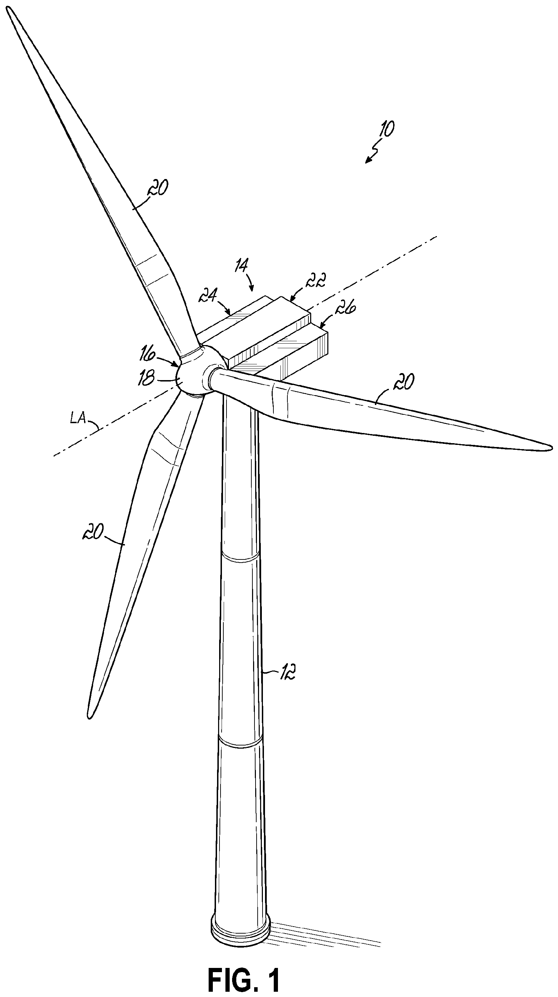

Referring to Fig. 1, a wind turbine 10 includes a tower 12, a nacelle 14 disposed at the apex of the tower 12, and a rotor 16 operatively coupled to a generator (not shown) housed inside the nacelle, and a gearbox (not shown) also housed inside the nacelle 14. In addition to the generator and gearbox, the nacelle 14 may house various components needed to convert wind energy into electrical energy and to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which air currents having lower turbulence and higher velocity are typically found. The nacelle 14 defines a longitudinal axis LA and is configured to align its longitudinal axis LA with the direction of the incoming wind during the operation of the wind turbine.

The rotor 16 may include a central hub 18 and a plurality of blades 20 attached to the central hub 18 at locations distributed about the circumference of the central hub 18. In the representative embodiment, the rotor 16 includes three blades 20, however the number may vary. The blades 20, which project radially outward from the central hub 18, are configured to interact with passing air currents to produce rotational forces that cause the central hub 18 to spin about its longitudinal axis. The design, construction, and operation of the blades 20 are familiar to a person having ordinary skill in the art of wind turbine design and may include additional functional aspects to optimize performance. For example, pitch angle control of the blades 20 may be implemented by a pitch control mechanism (not shown) responsive to wind velocity to optimize power production in low wind conditions, and to feather the blades if wind velocity exceeds design limitations.

The rotor 16 may be coupled to the gearbox directly or indirectly via by a drive shaft (not shown). Either way, the gearbox transfers the rotation of the rotor 16 through a coupling (not shown) to the generator. Wind exceeding a minimum speed may activate the rotor 16, causing the rotor 16 to rotate in a direction substantially perpendicular to the wind, applying torque to the input shaft of the generator. The electrical power produced by the generator may be supplied to a power grid (not shown) or an energy storage system (not shown) for later release to the grid as understood by a person having ordinary skill in the art. In this way, the kinetic energy of the wind may be harnessed by the wind turbine 10 for power generation.

In an exemplary embodiment, the nacelle 14 may be formed from a main nacelle unit 22 and two auxiliary nacelle units 24, 26, which are removably affixed to the sides of the main nacelle unit 22. In one embodiment, the main nacelle unit 22 may be hoisted up and placed at the apex of the tower 12 using, for example, a large crane or the like. The auxiliary nacelle units 24, 26 may then be hoisted one at a time and attached to opposite sides of the main nacelle unit 22 to form the nacelle 14. Aspects of the present invention relate to a lifting apparatus for handling the auxiliary nacelle units 24, 26 and their connection or disconnection from the sides of the main nacelle unit 22.

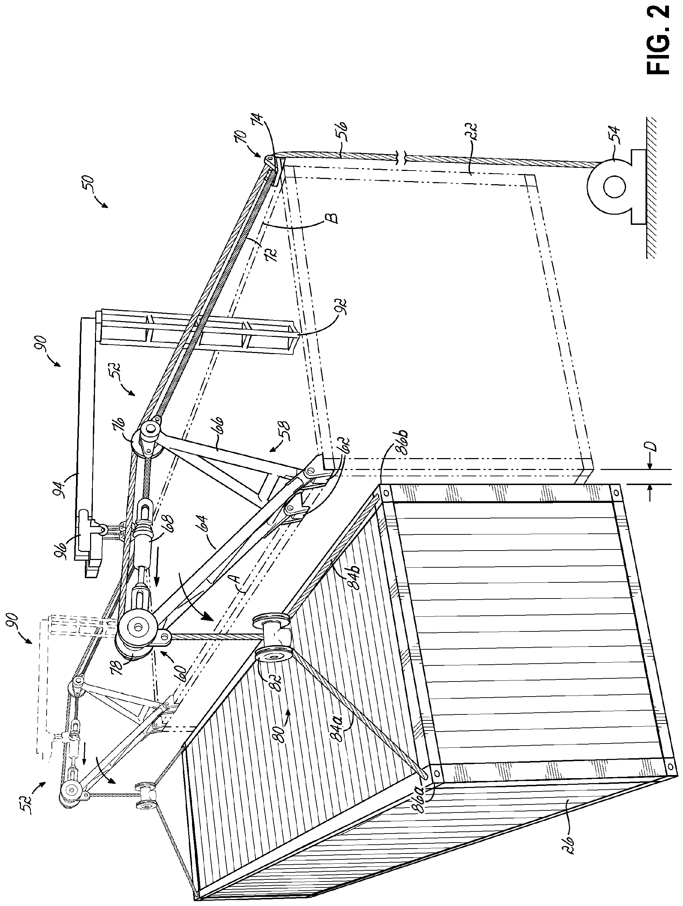

Referring to Fig. 2, a lifting arrangement 50 according to one embodiment of the invention is depicted coupled to the main nacelle unit 22. The lifting arrangement 50 may include at least one temporary hoist 52 formed from a plurality of hoist components, including a winch 54, a hoist cable 56 operatively coupled to the winch 54, and a support frame 58 attached to the main nacelle unit 22. In an exemplary embodiment, the support frame 58 may include a hoist cable locator 60, one or more (e.g., a pair) spaced-apart mounting brackets 62 connected to a first side edge A the main nacelle unit 22, a boom 64 pivotally connected to the mounting brackets 62, the hoist cable locator 60 being coupled to the distal end of the boom 64, a mast 66 pivotally connected to the mounting brackets 62, and an actuator 68 coupled to the boom 64 and the mast 66. In one embodiment, the lifting arrangement 50 may optionally further include one or more support brackets 70 connected to the main nacelle unit 22. Preferably, the one or more support brackets 70 may be connected to, as illustrated, to an opposing second side edge B of the main nacelle unit 22. Moreover, the support frame 58 may further include a tension member 72 coupled to the mast 66 to thereby fix the position of the mast 66. In one embodiment, the tension member 72 may be coupled to the one or more support brackets 70 to fix the position of the mast 66. Optionally, the tension member 72 may be a rigid strut. Alternatively, the tension member 72 may be a wire, rope, or cable. In one embodiment, the one or more support brackets 70 may be connected to the main nacelle unit 22 as a part of the main nacelle unit 22, or the one or more support brackets 70 may be a part of the support frame 58 of the temporary hoist 52, to be connected to the main nacelle unit 22 during set up of the temporary hoist 52.

From the winch 54, the hoist cable 56 may be routed to engage a bracket cable guide 74. In an exemplary embodiment, the bracket cable guide 74 may be located on the one or more support brackets 70. The hoist cable 56 may be further routed to a boom cable guide 78 on the boom 64 and to the hoist cable locator 60. Finally, the hoist cable 56 may be routed to a lifting yoke 80 associated with lifting the auxiliary nacelle unit 26 (as illustrated in the figures). The lifting yoke 80 may include a central lifting block 82 from which cables 84a, 84b extend between the central lifting block 82 and corners 86a, 86b of the auxiliary nacelle unit 26. The cables 84a, 84b may be removably attached to the corners 86a, 86b so the lifting arrangement 50 may be connected or disconnected from the auxiliary nacelle unit 26 as needed. Optionally, a further cable guide may be provided on the mast 66, in the form of a mast cable guide 76. Accordingly, the hoist cable 56 may be routed from the winch 54, via the bracket cable guide 74 to the mast cable guide 76, and thereafter to the boom cable guide 78 and so forth as mentioned above. The provision of a mast cable guide 76 may ease the loads on the boom 64 during operation of the temporary hoist 52.

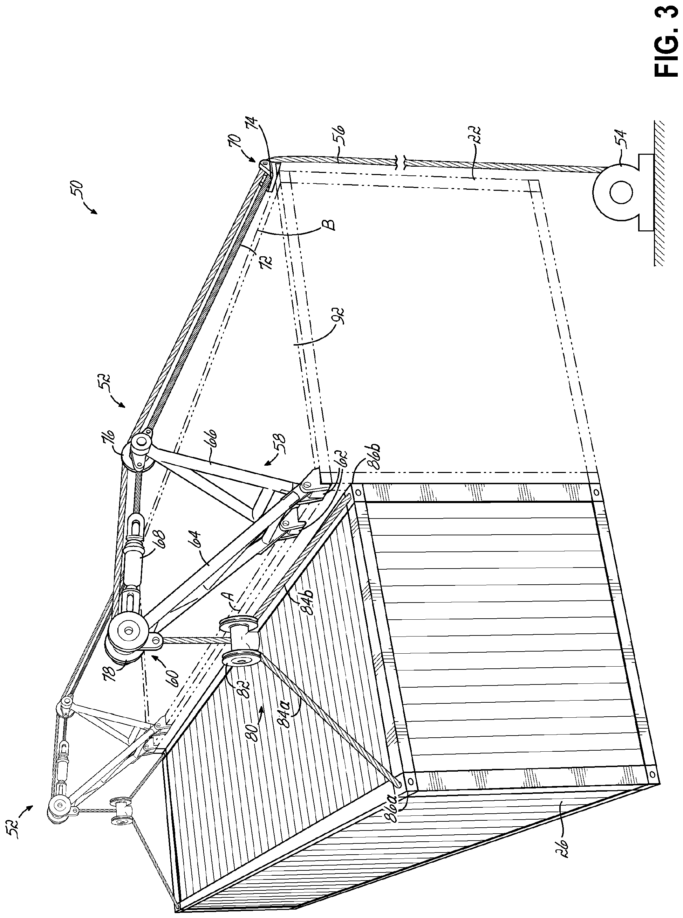

In one embodiment, the lifting arrangement may include two temporary hoists 52 as depicted in Figs. 2 and 3, one adjacent the forward end of the main nacelle unit 22 and one adjacent the rear end of the main nacelle unit 22. The forward temporary hoist 52 is preferably connected to the forward end of the auxiliary nacelle unit 24 and the rear temporary hoist 52 is preferably connected to the rear end of the auxiliary nacelle unit 24. While two temporary hoists are illustrated, it should be understood that three or more temporary hoists 52 may be used depending on the size and weight of the auxiliary nacelle unit 26. For example, additional temporary hoists 52, above two in number, may be distributed along the length direction of the main nacelle unit 22.

In one embodiment, the actuator 68 is configured to move the boom 64 and the hoist cable locator 60 attached thereto between a retracted position (Fig. 2) and an extended position (Fig. 3). To go from the extended position to the retracted position, the actuator 68 is activated to decrease its length, causing the boom 64 to pivot toward the mast 66 and moving the hoist cable locator 60 laterally toward the main nacelle unit 22. Thus, when the auxiliary nacelle unit 26 is attached to the hoist cable locator 60 via the lifting yoke 80, the auxiliary nacelle unit 24 is configured to be in abutting relation to the main nacelle unit 22 when the boom 64 is in the retracted position. To go from the retraced position to the extended position, the actuator 68 is activated to increase its length (see arrows in Fig. 2), causing the boom 64 to pivot away (see arrows in Fig. 2) from the mast 66 and moving the hoist cable locator 60 laterally away to the main nacelle unit 22. Thus, when the auxiliary nacelle unit 26 is attached to the hoist cable locator 60 via the lifting yoke 80, the auxiliary nacelle unit 24 is configured to be laterally spaced a distance D from the main nacelle unit 22 when the boom 64 is in the retracted position.

In one embodiment, the plurality of hoist components or subassemblies thereof may be lifted atop the main nacelle unit 22 and then assembled to form the temporary hoist 52. In this regard, a temporary jib hoist may be used to lift the plurality of hoist components or subassemblies from adjacent the base of the tower 12 to atop the main nacelle unit 22 so the temporary hoist 52 may be assembled thereon. An exemplary jib hoist 90 is depicted in Fig. 2. A second (separate) jib hoist 90 may be used to assemble the second temporary hoist 52 shown in Fig. 2. The temporary jib hoist 90 may be placed atop the main nacelle unit 22 with a crane (not shown) on board the main nacelle unit or transported up an elevator in the tower 12. In one embodiment, the jib hoist 90 includes a tower 92 affixed to the top of main nacelle unit 22 and a boom 94 pivotally connected to the top of the tower 92. A lifting mechanism 96, such as a winch, may be slidably coupled to the boom 94, so that the lifting mechanism may slide along the boom 94 to accommodate placing the hoist components in various locations atop the main nacelle unit 22 in conjunction with the pivoting boom 94 relative to the tower 92. The lifting mechanism 96 is configured to attach to the plurality of hoist components or subassemblies thereof and lift them from adjacent the base of the tower 12 to atop the main nacelle unit 22, or vice versa. When the temporary hoist 52 is no longer needed atop the main nacelle unit, the temporary hoist 52 may be disassembled and the plurality of hoist components or subassemblies thereof may be lowered from atop the main nacelle unit 22 to adjacent the base of the tower 12 using, for example, the jib hoist 90. The jib hoist 90 may then be removed from the main nacelle unit 22.

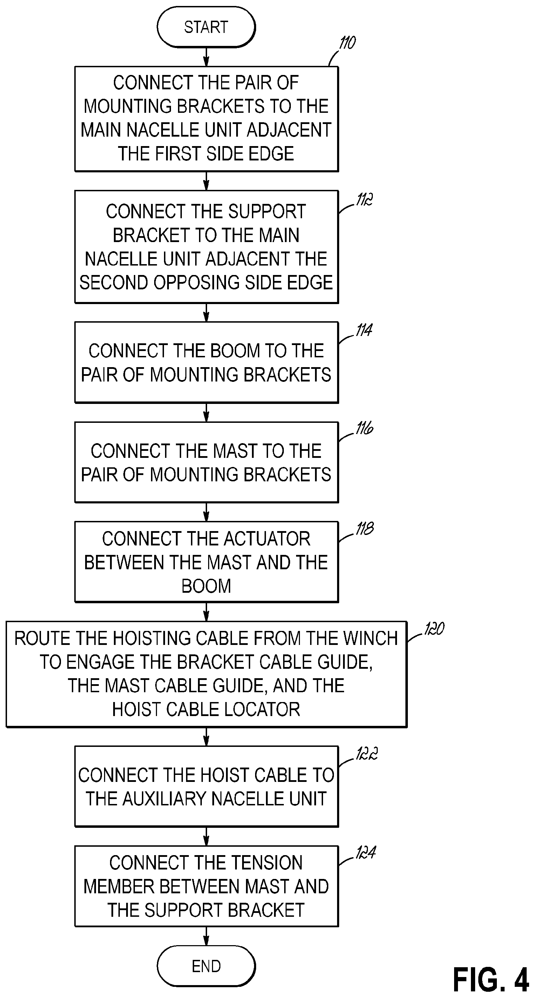

A flowchart illustrating a sequence of exemplary steps for assembling the temporary hoist 52 in accordance with an embodiment of the invention is set forth in Fig. 4. As discussed above, the jib hoist 90 may be used during the assembly of the temporary hoist 52 to lift hoist components or subassemblies thereof from adjacent the base of the tower 12 to atop the main nacelle unit 22. In step 110, service technicians on the main nacelle unit 22 may connect the pair of mounting brackets 62 to the side edge A of the main nacelle unit 22. In step 112, the service technicians may optionally connect the support bracket 70 to side edge B of the main nacelle unit 22 in a generally aligned configuration relative to the mounting brackets 62. In step 114, service technicians may also pivotally connect the boom 64 to the pair of mounting brackets 62. In step 116, service technicians may pivotally connect the mast 66 to the pair of mounting brackets 62. In step 118, service technicians may connect the actuator 68 between the mast 66 and the boom 64. In step 120, service technicians may route the hoist cable 56 from the winch 54 to engage the hoist cable locator 60 on the boom 64. Optionally, the hoist cable 56 may be routed to the bracket cable guide 74 on the support bracket 70 and the mast cable guide 76 on the mast 66. In accordance with the method, and in further step 122, service technicians may connect the hoist cable 56 to the auxiliary nacelle unit 26. Furthermore, in step 124, service technicians may connect the tension member 72 to the mast 66 to fix the position of the mast 66. For example, the tension member 72 may be connected between the mast 66 and the support bracket 70. These steps effectively provide for the assembly of the temporary hoist 52. In one embodiment, the temporary hoist 52 may be disassembled by essentially reversing the steps provided in Fig 4.

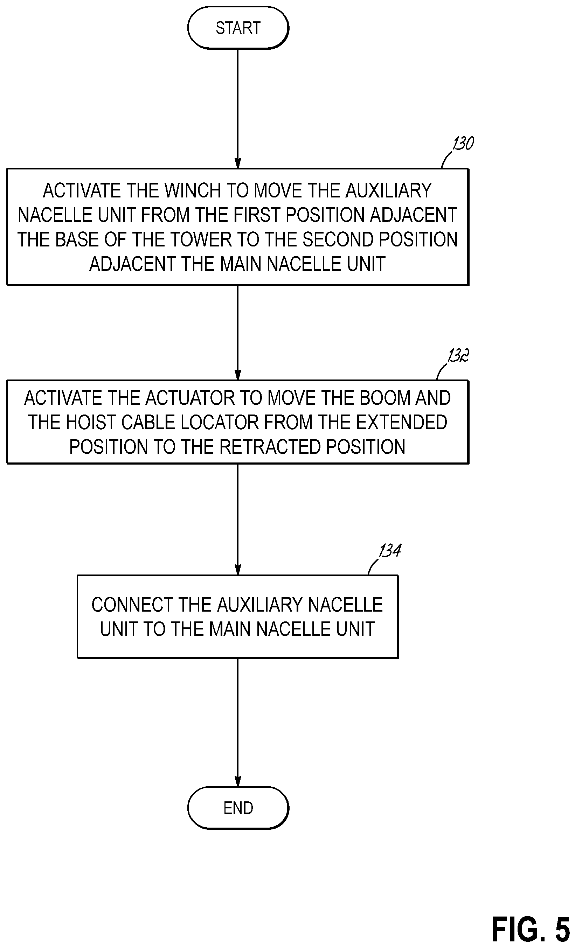

A flowchart illustrating a sequence of exemplary steps for connecting the auxiliary nacelle unit 26 to the main nacelle unit 22 is set forth in Fig. 5. These steps assume that the temporary hoist 52 is assembled atop the main nacelle unit 22. According to the method and in step 130, the winch 54 may be activated to move the auxiliary nacelle unit 26 from the first position adjacent the base of the tower 12 to the second position adjacent the main nacelle unit 22. In step 132, the actuator 68 may be activated to move the boom 64 and the hoist cable locator 60 from the extended position to the retracted position. As discussed above, with the boom 64 and the hoist cable locator 60 in the extended position, the auxiliary nacelle unit 26 is configured to be laterally spaced from the main nacelle unit 22. With the boom 64 and the hoist cable locator 60 in the retracted position, the auxiliary nacelle unit 26 is configured to be in abutting relation with the main nacelle unit 22. In step 134, a service technician may connect the auxiliary nacelle unit 26 to the main nacelle unit 22.

A flowchart illustrating a sequence of exemplary steps for disconnecting the auxiliary nacelle unit 26 from the main nacelle unit 22 is set forth in Fig. 5. Similar to the above, these steps assume that the temporary hoist 52 is assembled atop the main nacelle unit 22. According to the method, and in step 140, a service technician may disconnect the auxiliary nacelle unit 26 from the main nacelle unit 22. In step 142, the actuator 68 may be activated to move the boom 64 and the hoist cable locator 60 from the retracted position to the extended position. In step 144, the winch 54 may be activated to move the auxiliary nacelle unit 26 from the first position adjacent the main nacelle unit 22 to the second position adjacent the base of the tower 12.

As discussed above, the disclosed lifting arrangement 50 provides a number of benefits to the assembly/disassembly of a nacelle 14 of a wind turbine 10. More particularly, the temporary nature of the hoists 52 and the jib hoist 90 allows for the assembly/disassembly of an auxiliary nacelle unit 26 to/from the main nacelle unit 22 without the use of a large, high-capacity crane. Thus, the costs associated with the transport, rental, and use of such cranes may be minimized or eliminated. Moreover, the lifting arrangement 50 provides controlled movement of the auxiliary nacelle unit 26 relative to the main nacelle unit 22 such that the assembly/disassembly may be achieved with minimal risk of damage to the nacelle units 22, 24, 26. While the above illustrated and described the assembly/disassembly of the auxiliary nacelle unit 36 to/from the main nacelle unit 22, it should be understood that the lifting arrangement 50 may also be used to assemble/disassemble the other auxiliary nacelle unit 24 to/from the main nacelle unit 22. It should be further understood that the lifting arrangement 50 may be used to handle an auxiliary nacelle unit whether the opposite auxiliary nacelle unit is attached to the main nacelle unit 22 or not.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A method of handling an auxiliary nacelle unit (24, 26) of a wind turbine (10), the wind turbine (10) including a tower (12) and a main nacelle unit (22) attached to the tower (12), the method comprising:
providing at least one temporary hoist (52) formed from a plurality of hoist components, including a winch (54), a hoist cable (56) operatively coupled to the winch (54), and a support frame (58) defining a hoist cable locator (60) configured to engage the hoist cable (56), the hoist cable locator (60) being movable between a retracted position and an extended position, the support frame (58) further comprising:
a boom (64) carrying the hoist cable locator (60);
a mast (66); and
an actuator (68),
assembling the at least one temporary hoist (52) on the main nacelle unit (22), comprising:
pivotally connecting the boom (64) to the main nacelle unit (22);
pivotally connecting the mast (66) to the main nacelle unit (22);
connecting the actuator (68) between the mast (66) and the boom (64); and
routing the hoist cable (56) from the winch (54) to the hoist cable locator (60), connecting the hoist cable (56) to the auxiliary nacelle unit (24, 26);
activating the winch (54) to move the auxiliary nacelle unit (24, 26) from a first position to a second position; and
activating the actuator (68) to move the hoist cable locator (60) between the retracted position and the extended position.

2. The method of claim 1, wherein the auxiliary nacelle unit (24, 26) is being assembled to the main nacelle unit (22), and wherein:
activating the winch (54) further comprises activating the winch (54) to move the auxiliary nacelle unit (24, 26) from the first position adjacent a base of the tower (12) to the second position adjacent the main nacelle unit (22) on the tower (12); and
moving the hoist cable locator (60) further comprises moving the hoist cable locator (60) from the extended position, where the auxiliary nacelle unit (24, 26) is laterally spaced from the main nacelle unit (22), to the retracted position, where the auxiliary nacelle unit (24, 26) is in abutting relation to the main nacelle unit (22).

3. The method of claim 1, wherein the auxiliary nacelle unit (24, 26) is being disassembled from the main nacelle unit (22), and wherein:
activating the winch (54) further comprises activating the winch (54) to move the auxiliary nacelle unit (24, 26) from the first position adjacent the main nacelle unit (22) on the tower (12) to the second position adjacent the base of the tower (12); and
moving the hoist cable locator (60) further comprises moving the hoist cable locator (60) of the at least one temporary hoist (52) from the retracted position, where the auxiliary nacelle unit (24, 26) is in abutting relation to the main nacelle unit (22), to the extended position, where the auxiliary nacelle unit (24, 26) is laterally spaced from the main nacelle unit (22).

4. The method of any of the preceding claims, wherein the support frame (58) further comprises one or more mounting brackets (62), and assembling the at least one temporary hoist (52) further comprises:
connecting the one or more mounting brackets (62) to the main nacelle unit (22) adjacent a first side edge (A),
wherein pivotally connecting the boom (64) includes pivotally connecting the boom (64) to the one or more mounting brackets (62), and
wherein pivotally connecting the mast (66) includes pivotally connecting the mast (66) to the one or more mounting brackets (62).

5. The method of claim 4, wherein the support frame (58) further comprises one or more support brackets (70), and assembling the at least one temporary hoist (52) further comprises connecting the one or more support brackets (70) to the main nacelle unit (22) adjacent a second opposing side edge (B),

6. The method of any of the preceding claims, wherein the support frame (58) further comprises a tension member (72), and assembling the at least one temporary hoist (52) further comprises connecting the tension member (72) to the mast (66) to fix the position of the mast (66).

7. The method of claim 6, when dependent from claim 5, further comprising connecting the tension member (72) between the one or more support brackets (70) and the mast (66) to fix the position of the mast (66).

8. The method of any of the preceding claims, further comprising locating the winch of the at least one temporary hoist (52) adjacent a base of the tower (12).

9. The method of any of the preceding claims, wherein providing the at least one temporary hoist (52) includes providing two or more temporary hoists (52).

10. The method of claim 9, wherein the two or more temporary hoists (52) includes a first temporary hoist (52) adjacent a forward end of the main nacelle unit (22) and configured to be connected to a forward portion of the auxiliary nacelle unit (24, 26), and a second temporary hoist (52) adjacent a rear end of the main nacelle unit (22) and configured to be connected to a rear portion of the auxiliary nacelle unit (24, 26).

11. A lifting arrangement (50) for handling an auxiliary nacelle unit (24, 26) of a wind turbine (10), the wind turbine (10) including a tower (12) and a main nacelle unit (22) attached to the tower (12), the lifting arrangement (50) comprising:
at least one temporary hoist (52) attachable to the main nacelle unit (22), the at least one temporary hoist (52) comprising:
a winch (54);
a hoist cable (56) operatively coupled to the winch (54); and
a support frame (58) attachable to the main nacelle unit (22) and including a hoist cable locator (60) configured to engage the hoist cable (56);
**characterized in that** the support frame (58) further comprises:
a boom (64) configured to be pivotally connected to the main nacelle unit (22), the boom (64) including the hoist cable locator (60);
a mast (66) configured to be pivotally connected to the main nacelle unit (22); and
an actuator (68) configured to be coupled to the boom (64) and the mast (66) and movable so as to move the hoist cable locator (60) between a retracted position and an extended position.

12. The lifting arrangement (50) of claim 11, wherein the support frame (58) further comprises:
one or more mounting brackets (62) attachable to the main nacelle unit (22) and configured to be pivotally connected to the boom (64) and the mast (66); and
a tension member (72) configured to be coupled to the mast (66) to thereby fix the position of the mast (66).

13. The lifting arrangement (50) of claim 12, wherein the support frame (58) further comprises one or more support brackets (70) attachable to the main nacelle unit (22), wherein the tension member is coupled to the one or more support brackets (70).

14. The lifting arrangement (50) of any of claims 11-13, wherein the at least one temporary hoist (52) includes two or more temporary hoists (52).

15. A partially assembled wind turbine (10), comprising:
a tower (12);
a main nacelle unit (22) connected to the tower (92); and
the lifting arrangement (50) of any of claims 11-14 attached to the main nacelle unit (22).

## Patentansprüche

1. Verfahren zum Handhaben einer Hilfsgondeleinheit (24, 26) einer Windkraftanlage (10), wobei die Windkraftanlage (10) einen Turm (12) und eine an dem Turm (12) befestigte Hauptgondeleinheit (22) einschließt, wobei das Verfahren umfasst:
Bereitstellen von mindestens einem temporären Hebezeug (52), das aus einer Vielzahl von Hebezeugkomponenten gebildet ist, die eine Winde (54), ein Hebezeugkabel (56), das betriebsmäßig mit der Winde (54) gekoppelt ist, und einen Stützrahmen (58) einschließen, der einen Hebezeugkabelpositionierer (60) definiert, der dazu konfiguriert ist, mit dem Hebezeugkabel (56) in Eingriff zu kommen, wobei der Hebezeugkabelpositionierer (60) zwischen einer eingefahrenen Position und einer ausgefahrenen Position bewegbar ist, wobei der Stützrahmen (58) weiter Folgendes umfasst:
einen Ausleger (64), der den Hebezeugkabelpositionierer (60) trägt;
einen Mast (66); und
eine Betätigungsvorrichtung (68),
Zusammenbauen des mindestens einen temporären Hebezeugs (52) an der Hauptgondeleinheit (22), umfassend:
schwenkbares Verbinden des Auslegers (64) mit der Hauptgondeleinheit (22);
schwenkbares Verbinden des Masts (66) mit der Hauptgondeleinheit (22);
Verbinden der Betätigungsvorrichtung (68) zwischen dem Mast (66) und dem Ausleger (64); und
Verlegen des Hebezeugkabels (56) von der Winde (54) zum Hebezeugkabelpositionierer (60),
Verbinden des Hebezeugkabels (56) mit der Hilfsgondeleinheit (24, 26);
Aktivieren der Winde (54), um die Hilfsgondeleinheit (24, 26) von einer ersten Position in eine zweite Position zu bewegen; und
Aktivieren der Betätigungsvorrichtung (68), um den Hebezeugkabelpositionierer (60) zwischen der eingefahrenen Position und der ausgefahrenen Position zu bewegen.

2. Verfahren nach Anspruch 1, wobei die Hilfsgondeleinheit (24, 26) mit der Hauptgondeleinheit (22) zusammengebaut wird, und wobei:
Aktivieren der Winde (54) weiter Aktivieren der Winde (54) zum Bewegen der Hilfsgondeleinheit (24, 26) von der ersten Position neben einer Basis des Turms (12) in die zweite Position neben der Hauptgondeleinheit (22) auf dem Turm (12) umfasst; und
Bewegen des Hebezeugkabelpositionierers (60) weiter Bewegen des Hebezeugkabelpositionierers (60) von der ausgefahrenen Position, in der die Hilfsgondeleinheit (24, 26) seitlich von der Hauptgondeleinheit (22) beabstandet ist, in die eingefahrene Position umfasst, in der die Hilfsgondeleinheit (24, 26) an der Hauptgondeleinheit (22) anliegt.

3. Verfahren nach Anspruch 1, wobei die Hilfsgondeleinheit (24, 26) von der Hauptgondeleinheit (22) abmontiert wird, und wobei:
Aktivieren der Winde (54) weiter Aktivieren der Winde (54) zum Bewegen der Hilfsgondeleinheit (24, 26) von der ersten Position neben der Hauptgondeleinheit (22) auf dem Turm (12) in die zweite Position neben der Basis des Turms (12) umfasst; und
Bewegen des Hebezeugkabelpositionierers (60) weiter Bewegen des Hebezeugkabelpositionierers (60) des mindestens einen temporären Hebezeugs (52) von der eingefahrenen Position, in der die Hilfsgondeleinheit (24, 26) an der Hauptgondeleinheit (22) anliegt, in die ausgefahrene Position umfasst, in der die Hilfsgondeleinheit (24, 26) seitlich von der Hauptgondeleinheit (22) beabstandet ist.

4. Verfahren nach einem der vorstehenden Ansprüche, wobei der Stützrahmen (58) weiter eine oder mehrere Stützhalterungen (62) umfasst und Zusammenbauen des mindestens einen temporären Hebezeugs (52) weiter Folgendes umfasst:
Verbinden der einen oder mehreren Stützhalterungen (62) mit der Hauptgondeleinheit (22) neben einer ersten Seitenkante (A),
wobei schwenkbares Verbinden des Auslegers (64) schwenkbares Verbinden des Auslegers (64) mit der einen oder den mehreren Stützhalterungen (62) einschließt, und
wobei schwenkbares Verbinden des Masts (66) schwenkbares Verbinden des Masts (66) mit der einen oder den mehreren Stützhalterungen (62) einschließt.

5. Verfahren nach Anspruch 4, wobei der Stützrahmen (58) weiter eine oder mehrere Stützhalterungen (70) umfasst und Zusammenbauen des mindestens einen temporären Hebezeugs (52) weiter Verbinden der einen oder mehreren Stützhalterungen (70) mit der Hauptgondeleinheit (22) neben einer zweiten gegenüberliegenden Seitenkante (B) umfasst.

6. Verfahren nach einem der vorstehenden Ansprüche, wobei der Stützrahmen (58) weiter ein Zugelement (72) umfasst und Zusammenbauen des mindestens einen temporären Hebezeugs (52) weiter Verbinden des Zugelements (72) mit dem Mast (66) zum Fixieren der Position des Masts (66) umfasst.

7. Verfahren nach Anspruch 6, sofern abhängig von Anspruch 5, das weiter Verbinden des Zugelements (72) zwischen der einen oder den mehreren Stützhalterungen (70) und dem Mast (66) zum Fixieren der Position des Masts (66) umfasst.

8. Verfahren nach einem der vorstehenden Ansprüche, das weiter Anordnen der Winde des mindestens einen temporären Hebezeugs (52) neben einer Basis des Turms (12) umfasst.

9. Verfahren nach einem der vorstehenden Ansprüche, wobei Bereitstellen des mindestens einen temporären Hebezeugs (52) Bereitstellen von zwei oder mehr temporären Hebezeugen (52) einschließt.

10. Verfahren nach Anspruch 9, wobei die zwei oder mehr temporären Hebezeuge (52) ein erstes temporäres Hebezeug (52) neben einem vorderen Ende der Hauptgondeleinheit (22), das dazu konfiguriert ist, mit einem vorderen Abschnitt der Hilfsgondeleinheit (24, 26) verbunden zu werden, und ein zweites temporäres Hebezeug (52) neben einem hinteren Ende der Hauptgondeleinheit (22) einschließen, das dazu konfiguriert ist, mit einem hinteren Abschnitt der Hilfsgondeleinheit (24, 26) verbunden zu werden.

11. Hebeanordnung (50) zum Handhaben einer Hilfsgondeleinheit (24, 26) einer Windkraftanlage (10), wobei die Windkraftanlage (10) einen Turm (12) und eine an dem Turm (12) befestigte Hauptgondeleinheit (22) einschließt, wobei die Hebeanordnung (50) Folgendes umfasst:
mindestens ein temporäres Hebezeug (52), das an der Hauptgondeleinheit (22) befestigbar ist, wobei das mindestens eine temporäre Hebezeug (52) Folgendes umfasst:
eine Winde (54);
ein Hebezeugkabel (56), das betriebsmäßig mit der Winde (54) gekoppelt ist; und
einen Stützrahmen (58), der an der Hauptgondeleinheit (22) befestigbar ist und einen Hebezeugkabelpositionierer (60) einschließt, der dazu konfiguriert ist, mit dem Hebezeugkabel (56) in Eingriff zu kommen;
**dadurch gekennzeichnet, dass** der Stützrahmen (58) weiter umfasst:
einen Ausleger (64), der dazu konfiguriert ist, schwenkbar mit der Hauptgondeleinheit (22) verbunden zu werden, wobei der Ausleger (64) den Hebezeugkabelpositionierer (60) einschließt;
einen Mast (66), der dazu konfiguriert ist, schwenkbar mit der Hauptgondeleinheit (22) verbunden zu werden; und
eine Betätigungsvorrichtung (68), die dazu konfiguriert ist, mit dem Ausleger (64) und dem Mast (66) gekoppelt zu werden und so bewegbar ist, dass sie den Hebezeugkabelpositionierer (60) zwischen einer eingefahrenen Position und einer ausgefahrenen Position bewegen kann.

12. Hebeanordnung (50) nach Anspruch 11, wobei der Stützrahmen (58) weiter Folgendes umfasst:
eine oder mehrere Stützhalterungen (62), die an der Hauptgondeleinheit (22) befestigbar sind und dazu konfiguriert sind, schwenkbar mit dem Ausleger (64) und dem Mast (66) verbunden zu werden; und
ein Zugelement (72), das dazu konfiguriert ist, mit dem Mast (66) gekoppelt zu werden, um dadurch die Position des Masts (66) zu fixieren.

13. Hebeanordnung (50) nach Anspruch 12, wobei der Stützrahmen (58) weiter eine oder mehrere Stützhalterungen (70) umfasst, die an der Hauptgondeleinheit (22) befestigbar sind, wobei das Zugelement mit der einen oder den mehreren Stützhalterungen (70) gekoppelt ist.

14. Hebeanordnung (50) nach einem der Ansprüche 11-13, wobei das mindestens eine temporäre Hebezeug (52) zwei oder mehr temporäre Hebezeuge (52) einschließt.

15. Teilweise zusammengebaute Windkraftanlage (10), umfassend:
einen Turm (12);
eine Hauptgondeleinheit (22), die mit dem Turm (92) verbunden ist; und
die Hebeanordnung (50) nach einem der Ansprüche 11-14, die an der Hauptgondeleinheit (22) befestigt ist.

## Revendications

1. Procédé de manipulation d'une unité de nacelle auxiliaire (24, 26) d'une éolienne (10), l'éolienne (10) incluant une tour (12) et une unité de nacelle principale (22) fixée à la tour (12), le procédé comprenant :
la fourniture d'au moins un palan temporaire (52) formé à partir d'une pluralité de composants de palan, incluant un treuil (54), un câble de palan (56) couplé de manière fonctionnelle au treuil (54), et un cadre de support (58) définissant un localisateur de câble de palan (60) configuré pour venir en prise avec le câble de palan (56), le localisateur de câble de palan (60) pouvant se déplacer entre une position rétractée et une position étendue, le cadre de support (58) comprenant en outre :
une flèche (64) portant le localisateur de câble de palan (60) ;
un mât (66) ; et
un actionneur (68),
l'assemblage du au moins un palan temporaire (52) sur l'unité de nacelle principale (22), comprenant :
la liaison pivotante de la flèche (64) à l'unité de nacelle principale (22) ;
la liaison pivotante du mât (66) à l'unité de nacelle principale (22) ;
la liaison de l'actionneur (68) entre le mât (66) et la flèche (64) ; et
l'acheminement du câble de palan (56) du treuil (54) au localisateur de câble de palan (60),
la liaison du câble de palan (56) à l'unité de nacelle auxiliaire (24, 26) ;
l'activation du treuil (54) pour déplacer l'unité de nacelle auxiliaire (24, 26) d'une première position à une seconde position ; et
l'activation de l'actionneur (68) pour déplacer le localisateur de câble de palan (60) entre la position rétractée et la position étendue.

2. Procédé selon la revendication 1, dans lequel l'unité de nacelle auxiliaire (24, 26) est assemblée à l'unité de nacelle principale (22), et dans lequel :
l'activation du treuil (54) comprend en outre l'activation du treuil (54) pour déplacer l'unité de nacelle auxiliaire (24, 26) de la première position adjacente à une base de la tour (12) à la seconde position adjacente à l'unité de nacelle principale (22) sur la tour (12) ; et
le déplacement du localisateur de câble de palan (60) comprend en outre le déplacement du localisateur de câble de palan (60) de la position étendue, dans laquelle l'unité de nacelle auxiliaire (24, 26) est espacée latéralement de l'unité de nacelle principale (22), vers la position rétractée, dans laquelle l'unité de nacelle auxiliaire (24, 26) est en relation de butée avec l'unité de nacelle principale (22).

3. Procédé selon la revendication 1, dans lequel l'unité de nacelle auxiliaire (24, 26) est démontée de l'unité de nacelle principale (22), et dans lequel :
l'activation du treuil (54) comprend en outre l'activation du treuil (54) pour déplacer l'unité de nacelle auxiliaire (24, 26) de la première position adjacente à l'unité de nacelle principale (22) sur la tour (12) à la seconde position adjacente à la base de la tour (12) ; et
le déplacement du localisateur de câble de palan (60) comprend en outre le déplacement du localisateur de câble de palan (60) du au moins un palan temporaire (52) de la position rétractée, dans laquelle l'unité de nacelle auxiliaire (24, 26) est en relation de butée avec l'unité de nacelle principale (22), à la position étendue, dans laquelle l'unité de nacelle auxiliaire (24, 26) est espacée latéralement de l'unité de nacelle principale (22).

4. Procédé selon l'une quelconque des revendications précédentes, dans lequel le cadre de support (58) comprend en outre une ou plusieurs équerres de montage (62) et l'assemblage du au moins un palan temporaire (52) comprend en outre :
la liaison des une ou plusieurs équerres de montage (62) à l'unité de nacelle principale (22) adjacente à un premier bord latéral (A),
dans lequel la liaison pivotante de la flèche (64) inclut la liaison pivotante de la flèche (64) aux une ou plusieurs équerres de montage (62), et
dans lequel la liaison pivotante du mât (66) inclut la liaison pivotante du mât (66) aux une ou plusieurs équerres de montage (62).

5. Procédé selon la revendication 4, dans lequel le cadre de support (58) comprend en outre une ou plusieurs équerres de support (70) et l'assemblage du au moins un palan temporaire (52) comprend en outre la liaison des une ou plusieurs équerres de support (70) à l'unité de nacelle principale (22) adjacente à un second bord latéral opposé (B).

6. Procédé selon l'une quelconque des revendications précédentes, dans lequel le cadre de support (58) comprend en outre un élément de tension (72) et l'assemblage du au moins un palan temporaire (52) comprend en outre la liaison de l'élément de tension (72) au mât (66) pour fixer la position du mât (66).

7. Procédé selon la revendication 6, lorsqu'elle dépend de la revendication 5, comprenant en outre la liaison de l'élément de tension (72) entre les une ou plusieurs équerres de support (70) et le mât (66) pour fixer la position du mât (66).

8. Procédé selon l'une quelconque des revendications précédentes, comprenant en outre la localisation du treuil du au moins un palan temporaire (52) adjacent à une base de la tour (12).

9. Procédé selon l'une quelconque des revendications précédentes, dans lequel la fourniture du au moins un palan temporaire (52) inclut la fourniture de deux palans temporaires (52) ou plus.

10. Procédé selon la revendication 9, dans lequel les deux palans temporaires (52) ou plus incluent un premier palan temporaire (52) adjacent à une extrémité avant de l'unité de nacelle principale (22) et configuré pour être relié à une partie avant de l'unité de nacelle auxiliaire (24, 26), et un second palan temporaire (52) adjacent à une extrémité arrière de l'unité de nacelle principale (22) et configuré pour être relié à une partie arrière de l'unité de nacelle auxiliaire (24, 26).

11. Agencement de levage (50) pour la manutention d'une unité de nacelle auxiliaire (24, 26) d'une éolienne (10), l'éolienne (10) incluant une tour (12) et une unité de nacelle principale (22) fixée à la tour (12), l'agencement de levage (50) comprenant :
au moins un palan temporaire (52) pouvant être fixé à l'unité de nacelle principale (22), le au moins un palan temporaire (52) comprenant :
un treuil (54) ;
un câble de palan (56) couplé de manière fonctionnelle au treuil (54) ; et
un cadre de support (58) pouvant être fixé à l'unité de nacelle principale (22) et incluant un localisateur de câble de palan (60) configuré pour venir en prise avec le câble de palan (56) ;
**caractérisé en ce que** le cadre de support (58) comprend en outre :
une flèche (64) configurée pour être reliée de manière pivotante à l'unité de nacelle principale (22), la flèche (64) incluant le localisateur de câble de palan (60) ;
un mât (66) configuré pour être relié de manière pivotante à l'unité de nacelle principale (22) ; et
un actionneur (68) configuré pour être couplé à la flèche (64) et au mât (66) et pouvant se déplacer de manière à déplacer le localisateur de câble de palan (60) entre une position rétractée et une position étendue.

12. Agencement de levage (50) selon la revendication 11, dans lequel le cadre de support (58) comprend en outre :
une ou plusieurs équerres de montage (62) pouvant être fixées à l'unité de nacelle principale (22) et configurées pour être reliées de manière pivotante à la flèche (64) et au mât (66) ; et
un élément de tension (72) configuré pour être couplé au mât (66) pour fixer ainsi la position du mât (66).

13. Agencement de levage (50) selon la revendication 12, dans lequel le cadre de support (58) comprend en outre une ou plusieurs équerres de support (70) pouvant être fixées à l'unité de nacelle principale (22), dans lequel l'élément de tension est couplé aux une ou plusieurs équerres de support (70).

14. Agencement de levage (50) selon l'une quelconque des revendications 11-13, dans lequel le au moins un palan temporaire (52) inclut deux palans temporaires (52) ou plus.

15. Éolienne partiellement assemblée (10), comprenant :
une tour (12) ;
une unité de nacelle principale (22) reliée à la tour (92) ; et
l'agencement de levage (50) selon l'une quelconque des revendications 11-14 fixé à l'unité de nacelle principale (22).
